(19) Europäisches Patentamt / European Patent Office / Office européen des brevets

(11) EP 4 597 827 A1

(12) EUROPEAN PATENT APPLICATION
published in accordance with Art. 153(4) EPC

(43) Date of publication:
**06.08.2025 Bulletin 2025/32**

(21) Application number: **23879378.0**

(22) Date of filing: **20.04.2023**

(51) International Patent Classification (IPC):
***H02P 27/06*** ***(2006.01)*** ***F04B 49/06*** ***(2006.01)***
***F24F 11/86*** ***(2018.01)*** ***F25B 1/00*** ***(2006.01)***

(52) Cooperative Patent Classification (CPC):
**F04B 49/06; F24F 11/86; F25B 1/00; H02P 27/06**

(86) International application number:
**PCT/JP2023/015810**

(87) International publication number:
**WO 2024/084724 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.10.2022 JP 2022169319**

(71) Applicant: **Mitsubishi Heavy Industries Thermal Systems, Ltd.**
**Tokyo 100-8332 (JP)**

(72) Inventors:
- **KOMIYA Shinichi**
  **Tokyo 100-8332 (JP)**
- **AIBA, Kenichi**
  **Tokyo 100-8332 (JP)**
- **SHIMIZU, Kenji**
  **Tokyo 100-8332 (JP)**

(74) Representative: **Cabinet Beau de Loménie**
**103, rue de Grenelle**
**75340 Paris Cedex 07 (FR)**

# (54) CONTROL DEVICE, CONTROL METHOD, AND AIR CONDITIONER

(57) This control device controls the rotation speed of a motor by controlling an inverter for AC driving a motor that rotationally drives a compressor, wherein: a compensation torque value is calculated by multiplying an average output torque command value calculated in accordance with a deviation between the rotation speed of the motor and a rotation speed command value by a normalized torque pattern, which is a pattern of a plurality of coefficient values that change in accordance with the rotation angle of the motor and is set such that the total value of one rotation is zero; the compensation torque value is added to the average output torque command value, thereby setting an output torque command value of the motor in accordance with the rotation angle to control the inverter; and a pre-adjustment normalized torque pattern is compared with a post-adjustment normalized torque pattern, which is a normalized torque pattern obtained by individually adjusting a plurality of values using any one among a plurality of bit patterns each having a bit number that is based on the number of the plurality of coefficient values, said comparison being performed on the basis of respective calculation results of prescribed evaluation values associated with a fluctuation in rotation speed obtained as a result of being actually used to control the motor. Either one of the normalized torque patterns is adopted.



Processed by Luminess, 75001 PARIS (FR)

(Cont. next page)

FIG. 4

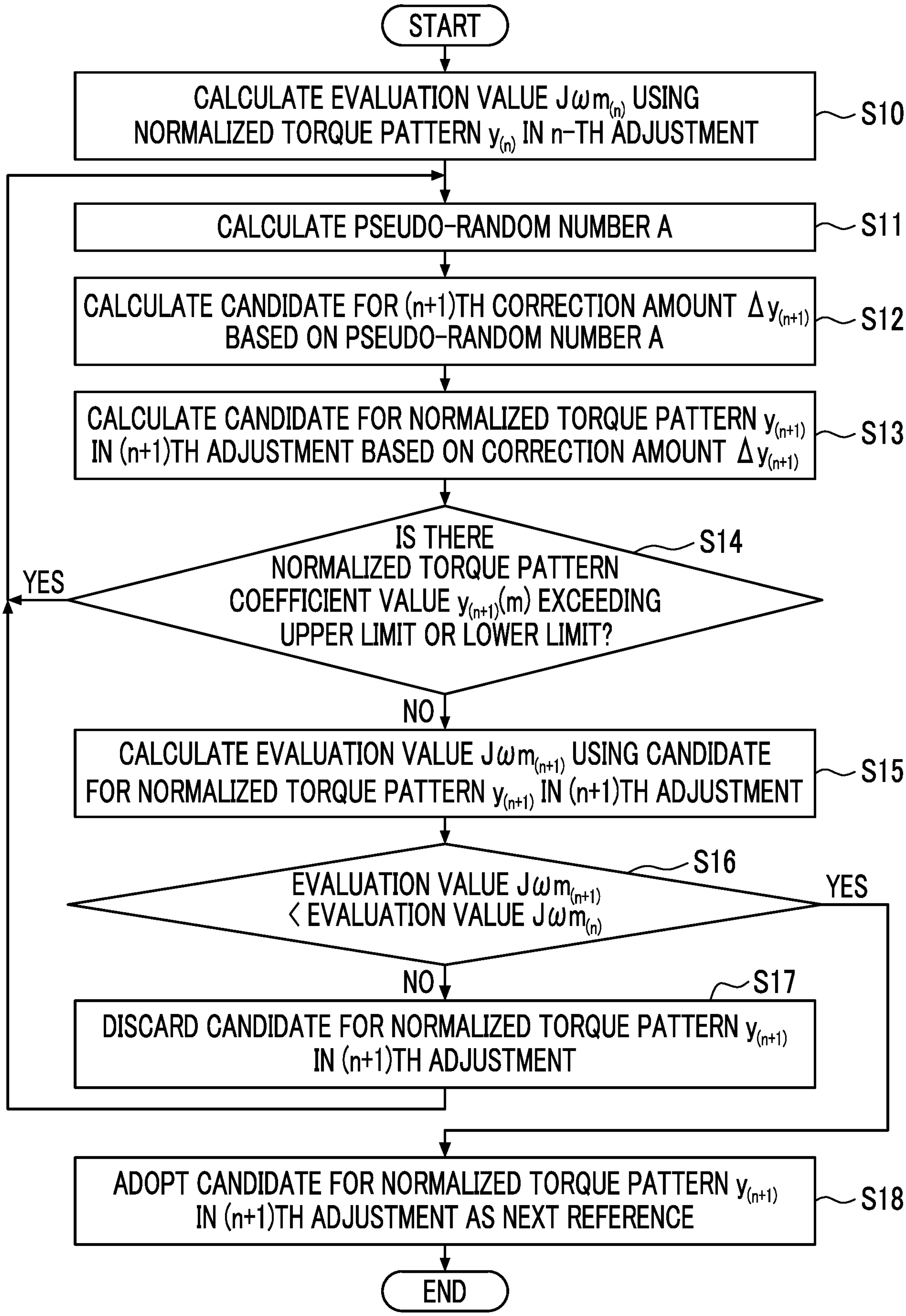
START
CALCULATE EVALUATION VALUE Jωm(n) USING NORMALIZED TORQUE PATTERN y(n) IN n-TH ADJUSTMENT
S10
CALCULATE PSEUDO-RANDOM NUMBER A
S11
CALCULATE CANDIDATE FOR (n+1)TH CORRECTION AMOUNT Δy(n+1) BASED ON PSEUDO-RANDOM NUMBER A
S12
CALCULATE CANDIDATE FOR NORMALIZED TORQUE PATTERN y(n+1) IN (n+1)TH ADJUSTMENT BASED ON CORRECTION AMOUNT Δy(n+1)
S13
IS THERE NORMALIZED TORQUE PATTERN COEFFICIENT VALUE y(n+1)(m) EXCEEDING UPPER LIMIT OR LOWER LIMIT?
S14
YES
NO
CALCULATE EVALUATION VALUE Jωm(n+1) USING CANDIDATE FOR NORMALIZED TORQUE PATTERN y(n+1) IN (n+1)TH ADJUSTMENT
S15
EVALUATION VALUE Jωm(n+1) < EVALUATION VALUE Jωm(n)
S16
YES
NO
DISCARD CANDIDATE FOR NORMALIZED TORQUE PATTERN y(n+1) IN (n+1)TH ADJUSTMENT
S17
ADOPT CANDIDATE FOR NORMALIZED TORQUE PATTERN y(n+1) IN (n+1)TH ADJUSTMENT AS NEXT REFERENCE
S18
END

## Description

### Technical Field

The present disclosure relates to a control device, a control method, and an air conditioner. Priority is claimed on Japanese Patent Application No. 2022-169319, filed October 21, 2022, the content of which is incorporated herein by reference.

### Background Art

In a rotary compressor, a change in refrigerant gas pressure occurs in each of intake, compression, and discharge strokes during one rotation, and thus steady load torque variations occur. Therefore, a control device described in PTL 1 suppresses a speed variation of a motor by compensating an output torque command in accordance with an estimated rotor position using a product of an average torque and a normalized torque pattern. The normalized torque pattern described in PTL 1 is, for example, a pattern of coefficient values set for every 30 degrees of a rotational angle of the rotor of the motor, and the coefficient values of each section are normalized such that a product of the average torque and the coefficient value of each section matches the average torque in total over all sections. In addition, in the control device, the normalized torque pattern is adjusted by multiplying the normalized torque pattern by one modulation rate selected from a plurality of modulation rates prepared in advance. The modulation rate is applied to the entire range or some sections of the rotational angle of the motor. In addition, the selection of the modulation rate is performed by increasing or decreasing modulation rates set in a plurality of stages such that an estimated rotation speed variation width is equal to or less than a predetermined value or becomes a minimum value, while determining whether the estimated rotation speed variation width has increased or decreased as a result of setting the modulation rate. According to the control device described in PTL 1, for example, even in a case where a waveform of a load torque of a compressor is changed due to pressure variations or the like, a motor output torque can be appropriately matched to the load torque. In PTL 1, it is described that it is possible to increase or decrease only a certain part of the normalized torque pattern or to change the pattern. However, there is no mention of a specific configuration.

### Citation List

### Patent Literature

[PTL 1] Japanese Unexamined Patent Application Publication No. 2008-245506

### Summary of Invention

### Technical Problem

The present disclosure has been made in view of the above circumstances, and an object of the present disclosure is to provide a control device, a control method, and an air conditioner capable of appropriately adjusting a normalized torque pattern.

### Solution to Problem

In order to appropriately adjust a normalized torque pattern, a control device according to the present disclosure is a control device for controlling a rotation speed of a motor that rotationally drives a compressor by controlling an inverter that AC-drives the motor, in which the control device calculates a compensation torque value by multiplying an average output torque command value calculated according to a deviation between the rotation speed of the motor and a rotation speed command value by a normalized torque pattern, which is a pattern of a plurality of coefficient values that change according to a rotational angle of the motor and that are set such that a total value for one rotation is zero, and sets an output torque command value of the motor according to the rotational angle by adding the compensation torque value to the average output torque command value to control the inverter, and the control device compares the normalized torque pattern before adjustment to a normalized torque pattern after adjustment, which is the normalized torque pattern in which the plurality of coefficient values are individually adjusted using any of a plurality of bit patterns each having the number of bits based on the number of the plurality of coefficient values, on the basis of each calculation result of a predetermined evaluation value related to variations in the rotation speed obtained as a result of actually using the normalized torque pattern to control the motor, and adopts any one of the normalized torque patterns.

A control method according to the present disclosure is a control method for controlling a rotation speed of a motor that rotationally drives a compressor by controlling an inverter that AC-drives the motor, the control method including: calculating a compensation torque value by multiplying an average output torque command value calculated according to a deviation between the rotation speed of the motor and a rotation speed command value by a normalized torque pattern, which is a pattern of a plurality of coefficient values that change according to a rotational angle of the motor and that are set such that a total value for one rotation is zero, and setting an output torque command value of the motor according to the rotational angle by adding the compensation torque value to the average output torque command value to control the inverter; and comparing the normalized torque pattern before adjustment to a normalized torque pattern after adjustment, which is the normalized torque pattern in which the plurality of coefficient values are individually adjusted using any of a plurality of bit patterns each having the number of bits based on the number of the plurality of coefficient values, on the basis of each calculation result of a predetermined evaluation value related to variations in the rotation speed obtained as a result of actually using the normalized torque pattern to control the motor, and adopting any one of the normalized torque patterns.

An air conditioner according to the present disclosure includes: a compressor; a motor that rotationally drives the compressor; an inverter that AC-drives the motor; and a control device that controls a rotation speed of the motor by controlling the inverter, in which the control device calculates a compensation torque value by multiplying an average output torque command value calculated according to a deviation between the rotation speed of the motor and a rotation speed command value by a normalized torque pattern, which is a pattern of a plurality of coefficient values that change according to a rotational angle of the motor and that are set such that a total value for one rotation is zero, and sets an output torque command value of the motor according to the rotational angle by adding the compensation torque value to the average output torque command value to control the inverter, and the control device compares the normalized torque pattern before adjustment to a normalized torque pattern after adjustment, which is the normalized torque pattern in which the plurality of coefficient values are individually adjusted using any of a plurality of bit patterns each having the number of bits based on the number of the plurality of coefficient values, on the basis of each calculation result of a predetermined evaluation value related to variations in the rotation speed obtained as a result of actually using the normalized torque pattern to control the motor, and adopts any one of the normalized torque patterns.

## Advantageous Effects of Invention

According to the control device, the control method, and the air conditioner of the present disclosure, the normalized torque pattern can be appropriately adjusted.

## Brief Description of Drawings

Fig. 1 is a block diagram showing a configuration example of a control device for a motor connected to an air-conditioning rotary compressor according to a first embodiment of the present disclosure.
Fig. 2 is a schematic diagram showing a configuration example of a normalized torque pattern table according to the first embodiment of the present disclosure.
Fig. 3 is a schematic diagram showing the configuration example of the normalized torque pattern table according to the first embodiment of the present disclosure.
Fig. 4 is a flowchart showing an operation example of the control device according to the first embodiment of the present disclosure.
Fig. 5 is a schematic diagram showing the operation example of the control device according to the first embodiment of the present disclosure.
Fig. 6 is a schematic diagram showing a configuration example of a normalized torque pattern table according to a second embodiment of the present disclosure.
Fig. 7 is a schematic diagram showing the configuration example of the normalized torque pattern table according to the second embodiment of the present disclosure.
Fig. 8 is a block diagram showing a configuration example of a control device for a motor connected to an air-conditioning rotary compressor according to a third embodiment of the present disclosure.
Fig. 9 is a block diagram showing a configuration example of a control device for a motor connected to an air-conditioning rotary compressor according to a fifth embodiment of the present disclosure.
Fig. 10 is a flowchart showing an operation example of the control device according to the fifth embodiment of the present disclosure.
Fig. 11 is a schematic block diagram showing a configuration of a computer according to at least one embodiment.

Description of Embodiments

Hereinafter, a control device, a control method, and an air conditioner according to embodiments of the present disclosure will be described with reference to Figs. 1 to 11. Fig. 1 is a block diagram showing a configuration example of a control device for a motor connected to an air-conditioning rotary compressor according to a first embodiment of the present disclosure. Figs. 2 and 3 are schematic diagrams showing a configuration example of a normalized torque pattern table according to the first embodiment of the present disclosure. Fig. 4 is a flowchart showing an operation example of the control device according to the first embodiment of the present disclosure. Fig. 5 is a schematic diagram showing the operation example of the control device according to the first embodiment of the present disclosure. Figs. 6 and 7 are schematic diagrams showing a configuration example of a normalized torque pattern table according to a second embodiment of the present disclosure. Fig. 8 is a block diagram showing a configuration example of a control device for a motor connected to an air-conditioning rotary compressor according to a third embodiment of the present disclosure. Fig. 9 is a block diagram showing a configuration example of a control device for a motor connected to an air-conditioning rotary compressor according to a fifth embodiment of the present disclosure. Fig. 10 is a flowchart showing an operation example of the control device according to the fifth embodiment of the present disclosure. Fig. 11 is a schematic block diagram showing a configuration of a computer according to at least one embodiment. In each drawing, identical or corresponding configurations are denoted by the same reference numerals, and the description thereof will be omitted as appropriate.

<First Embodiment>

Fig. 1 shows a configuration example of a control device 1 according to the first embodiment of the present disclosure. The control device 1 is a control device that controls a rotation speed (= rotational speed) of a motor 2 by controlling an inverter 4 that AC-drives the motor 2 that rotationally drives a compressor 5 included in an air conditioner 100. The inverter 4 supplies power to the motor 2 using an AC power supply 3 as a power source. A current sensor 10 detects a value of a current flowing from the inverter 4 to the motor 2. In the example shown in Fig. 1, the air conditioner 100 includes the control device 1, the motor 2, the inverter 4, and the current sensor 10. The control device 1 includes, for example, a computer such as a microcontroller and peripheral devices, peripheral circuits, and the like of the computer. Then, the control device 1 includes, as a functional configuration composed of a combination of hardware such as a computer and software such as a program executed by the computer, a subtraction unit 14, a speed control unit 20, a load torque compensation unit 13, a normalized torque pattern adjustment unit 26, a speed/position estimation unit 11, a two-phase/three-phase conversion unit 21, and a three-phase/two-phase conversion unit 22. The speed control unit 20 includes a speed PI control unit (speed proportional integral control unit) 12, an addition unit 15, a current conversion unit 16, a subtraction unit 17, and a current PI control unit 18.

The control device according to the present embodiment is not limited to the example shown in Fig. 1, and may be a control device that controls a motor that drives a compressor such as a rotary compressor. In addition, the compressor is not limited to one provided in an air conditioner. Fig. 1 shows a main configuration related to rotation speed control of the motor 2 by the control device 1, and, for example, some other configurations within the air conditioner 100 or the control device 1, such as a refrigerant circuit, a fan, and configurations related to temperature control and humidity control, are not shown.

(Configuration of Control Device)

The three-phase/two-phase conversion unit 22 receives as inputs three-phase current values I detected by the current sensor 10 and a rotational position (rotational angle) θes of a rotor of the motor 2 estimated by the speed/position estimation unit 11, converts the three-phase current values I detected by the current sensor 10 into a two-phase d-axis current value id and a two-phase q-axis current value iq on a d-axis and a q-axis, and outputs the d-axis current value id and the q-axis current value iq. The two-phase/three-phase conversion unit 21 receives as inputs the rotational position θes and a two-phase d-axis command voltage value vd* and a two-phase q-axis command voltage value vq* on the d-axis and the q-axis output by the current PI control unit 18, converts the d-axis command voltage value vd* and the q-axis command voltage value vq* into a three-phase voltage value V, and outputs the three-phase voltage value V to the inverter 4. The inverter 4 controls a plurality of switching elements (not shown) included in the inverter based on the three-phase voltage value V output by the two-phase/three-phase conversion unit 21.

The speed/position estimation unit 11 estimates the rotational position θes and a rotation speed ωmes of the rotor of the motor 2 based on the two-phase d-axis voltage value vd and the two-phase q-axis voltage value vq output by the current PI control unit 18 and the two-phase d-axis current value id and the two-phase q-axis current value iq output by the three-phase/two-phase conversion unit 22.

The subtraction unit 14 subtracts the rotation speed ωmes from a rotation speed command value ωm* to calculate a deviation Δωm, and outputs the deviation Δωm to the speed PI control unit 12 and the normalized torque pattern adjustment unit 26.

The speed PI control unit 12 calculates an average torque command value, which is an average value of an output torque command value of the motor 2 for reducing the deviation $\Delta\omega m$ through a proportional integration operation with regard to the deviation $\Delta\omega m$, and outputs the average torque command value to the addition unit 15 and the load torque compensation unit 13. In this case, the speed PI control unit 12 calculates and outputs an average output torque command value according to the deviation $\Delta\omega m$ between the rotation speed $\omega mes$ of the motor 2 and the rotation speed command value $\omega m^*$.

The load torque compensation unit 13 includes a normalized torque pattern table 131, inputs the average torque command value output by the speed PI control unit 12 and the rotational position $\theta es$ output by the speed/position estimation unit 11, calculates a compensation torque value using the normalized torque pattern table 131, and outputs the compensation torque value to the addition unit 15. The compensation torque value is a torque value for compensating for variations in a load torque of the motor 2 during one rotation of the motor 2.

The normalized torque pattern table 131 is a table that defines a normalized torque pattern that is a pattern of a plurality of coefficient values that change according to the rotational position (rotational angle) $\theta es$ of the motor 2. The load torque compensation unit 13 determines a coefficient value according to the rotational position (rotational angle) $\theta es$ of the motor 2 based on the normalized torque pattern table 131, and calculates the compensation torque value by multiplying the average torque command value by the determined coefficient value. The compensation torque value and the coefficient value take positive, negative, or zero values. In this case, the load torque compensation unit 13 calculates the compensation torque value at each rotational position using the equation (compensation torque value at each rotational position = average torque command value $\times$ normalized torque pattern at each rotational position). By adding the compensation torque value to the average torque command value, the output torque command value (output value of the addition unit 15) in which the variation in the load torque is compensated for according to the rotational position $\theta es$ is calculated. The compensation torque value is a value that compensates for the load torque variation during one rotation, and it is required that the average value of the output torque command values for one rotation compensated for by the compensation torque value matches the average torque command value. That is, it is required that a total value of the compensation torque values for one rotation is zero. In this case, it is required that a total value of the coefficient values constituting (defining) the normalized torque pattern for one rotation is also zero. Fig. 2 shows a configuration example of the normalized torque pattern table 131. In addition, Fig. 3 shows an example of a relationship between the rotor rotational angle and the plurality of coefficient values, in which a horizontal axis represents the rotor rotational angle [deg] and a vertical axis represents the coefficient value [%].

In the example shown in Fig. 2, the normalized torque pattern table 131 divides one rotation of 360 degrees into 12 sections each having 30 degrees and sets a coefficient value y(n)(m) for each section. Here, n represents the number of adjustments of the normalized torque pattern table 131. In addition, m represents a section number (m = 0 to 11). A pattern of the coefficient values y(n)(m) is referred to as a normalized torque pattern y(n). As described above, the coefficient values y(n)(m) are set such that the total value for one rotation is zero.

The number of divisions of the rotational position in the normalized torque pattern table 131, that is, the number of divisions of a phase axis can be determined as follows. That is, in order to deal with a reduction in the load torque variation of the compressor 5 up to a k-th-order component, the phase axis of the normalized torque pattern is divided into $2 \times lcm(1, ..., k) \times ndiv$. 2 represents a coefficient based on the sampling theorem. lcm(1, ..., k) represents the least common multiple of natural numbers from 1 to k. ndiv is any natural number. Accordingly, the torque variations including harmonics up to the k-th order can be expressed. For example, in a case of a reduction up to 1st-order to 3rd-order components, ndiv is set to 1, the number of divisions is $2 \times 6 \times 1$, so that 12 divisions are made.

The addition unit 15 adds the average torque command value output by the speed PI control unit 12 and the compensation torque value output by the load torque compensation unit 13 to calculate the output torque command value, and outputs the output torque command value to the current conversion unit 16.

The current conversion unit 16 receives as an input the output torque command value output by the addition unit 15, performs current conversion on the output torque command value, calculates a d-axis command current value id* and a q-axis command current value iq*, and outputs the d-axis command current value id* and the q-axis command current value iq* to the subtraction unit 17.

The subtraction unit 17 receives as inputs the d-axis command current value id* and the q-axis command current value iq*, and the d-axis current value id and the q-axis current value iq, respectively subtracts the d-axis current value id and the q-axis current value iq from the d-axis command current value id* and the q-axis command current value iq*, calculates each deviation of a d-axis component and a q-axis component between the command value and the motor current value, and outputs the deviations to the current PI control unit 18.

The current PI control unit 18 calculates the d-axis command voltage value vd* and the q-axis command voltage value vq* for reducing each deviation through the proportional integration operation with regard to each deviation output by the subtraction unit 17, and outputs the d-axis command voltage value vd* and the q-axis command voltage value vq* to the two-phase/three-phase conversion unit 21 and the speed/position estimation unit 11.

Next, the normalized torque pattern adjustment unit 26 will be described with reference to Fig. 4 and the like. In the present embodiment, the normalized torque pattern adjustment unit 26 compares a normalized torque pattern before adjustment, which is currently used as a reference, to a normalized torque pattern after adjustment, which is a normalized torque pattern in which a plurality of coefficient values are individually adjusted using any of a plurality of bit patterns each having the number of bits based on the number of the plurality of coefficient values constituting the normalized torque pattern (in the example shown in Figs. 2 and 3, the number of divisions, 12), on the basis of each calculation result of a predetermined evaluation value related to variations in a rotation speed obtained as a result of actually using the normalized torque pattern to control the motor 2, and adopts any one of the normalized torque patterns as the next normalized torque pattern. In the present embodiment, the plurality of bit patterns are a pseudo-random number sequence.

(Operation Example of Normalized Torque Pattern Adjustment Unit)

Fig. 4 shows an operation example of the normalized torque pattern adjustment unit 26. The normalized torque pattern adjustment unit 26 starts processing shown in Fig. 4 in a case where a predetermined condition is satisfied, adjusts each coefficient value y(n)(m) of the normalized torque pattern y(n) set in the normalized pattern table 131 to generate a next normalized torque pattern y(n+1), evaluates the normalized torque pattern y(n+1) based on the predetermined evaluation value related to the variations in the rotation speed, and determines whether to adopt the normalized torque pattern y(n+1) or to adopt the normalized torque pattern y(n) as it is. The predetermined condition for starting the processing shown in Fig. 4 is, for example, a certain time or a case where the evaluation value is equal to or greater than a predetermined threshold value (in a case where the smaller the evaluation value, the smaller a variation width). In addition, the number of divisions of the normalized torque pattern table 131 is set to 12 shown in Figs. 2 and 3.

When the processing shown in Fig. 4 is started, the normalized torque pattern adjustment unit 26 actually controls the motor 2 for a predetermined time using the normalized torque pattern y(n) in an n-th adjustment before adjustment, which is currently used as the reference, and calculates an evaluation value Jωm(n) (step S10). The evaluation value Jωm(n) is an evaluation value related to variations in a rotation speed ωm estimated by the speed/position estimation unit 11, and can be expressed by, for example, Equation (1). Note that, Equation (1) is an equation in which the number of adjustments n is not specified. The smaller the value of the evaluation value Jωm, the smaller the variation width (the better). The evaluation value Jωm is an example of the "predetermined evaluation value related to variations in a rotation speed obtained as a result of actually using the normalized torque pattern to control the motor" according to the present disclosure.

$$J\omega_m = LPF(\Delta\omega_m{}^2) \quad \cdots (1)$$

A function LPF (argument) is a function that executes a process (a process of applying a low-pass filter) of removing predetermined high-frequency components from a time-series value of an "argument". In the process of removing the high-frequency components, for example, a low-pass filter can be configured by a moving average method, cutoff in a frequency space, Gaussian convolution, and a process of a time-delay system. In a case where the low-pass filter is configured by the time-delay system, a time constant of the low-pass filter is set to be longer than a rotation cycle and shorter than a change cycle of a normalized pattern.

The evaluation value Jωm is the square of an effective value (Route Mean Square) of the speed variation, and includes all the harmonic components (the effective value is obtained by taking the square root, but this does not affect a magnitude relationship). The effect of the speed variation on vibration is inversely proportional to a frequency, since the integral of the speed variation becomes a position variation. Therefore, a value obtained by multiplying Δωm by the function LPF may be used as the evaluation value.

Next, the normalized torque pattern adjustment unit 26 calculates a pseudo-random number A, which is a bit pattern having the number of bits based on the number of the plurality of coefficient values (12 in the example shown in Figs. 2 and 3) constituting the normalized torque pattern (step S11). In step S11, in a case where the normalized torque pattern table 131 is divided into 12 sections, the normalized torque pattern adjustment unit 26 generates, for example, an integer A of 0 to 4095 (= $2^{12}$ - 1) as a random number (for example, a pseudo-random number such as an M series).

Next, the normalized torque pattern adjustment unit 26 obtains a normalized pattern change amount (also referred to as a correction amount) Δy(n+1)(0) to Δy(n+1)(11) in the next adjustment, an (n+1)th adjustment, on the basis of the pseudo-random number A, using Equations (2) to (4) (step S12).

$$\Delta y'_{(n+1)}(m) = 2\times \mathrm{mod}(\mathrm{int}(A/2^m), 2) - 1 \quad \cdots (2)$$

$$\Delta y'_{sum} = \sum_{m=0}^{11} \Delta y'_{(n+1)}(m) \quad \cdots (3)$$

$$\Delta y_{(n+1)}(m) = \Delta y \times (\Delta y'_{(n+1)}(m) - \Delta y'_{sum}/12) \quad \cdots (4)$$

A function int is a function that truncates decimal places, and a function mod is a remainder function. m is a number of a division section of the rotational angle (m = 0 to 11), and n is the number of adjustments. Δy'(n+1)(m) is a change amount of a provisional coefficient value based on the pseudo-random number A before a process of making the total value of the coefficient values zero is performed, Δy(n+1)(m) is a change amount of the coefficient value based on the pseudo-random number A after the process of making the total value of the coefficient values zero is performed, and Δy is an adjustment width. Note that, Equation (3) represents the sum of Δy'(n+1)(0) to Δy'(n+1)(11).

Next, the normalized torque pattern adjustment unit 26 calculates a candidate for the normalized torque pattern y(n+1) in the (n+1)th adjustment based on the change amount Δy(n+1) using Equation (5) (step S13).

$$y_{(n+1)}(m) = y_{(n)}(m) + \Delta y_{(n+1)}(m) \quad \cdots (5)$$

Next, the normalized torque pattern adjustment unit 26 determines whether or not there is a normalized torque pattern coefficient value y(n+1)(m) that exceeds an upper limit or an lower limit (greater than the upper limit or smaller than the lower limit) (step S14). In a case where there is the normalized torque pattern coefficient value y(n+1)(m) exceeding the upper limit or the lower limit (step S14: YES), the normalized torque pattern adjustment unit 26 does not use the normalized torque pattern as the normalized torque pattern after adjustment, returns to step S11, and calculates a new pseudo-random number A (step S11). By providing a determination process of step S14, the upper limit and the lower limit can be set for the normalized torque pattern, and for example, a normalized torque pattern with small speed variations can be determined within a range in which a maximum value of a torque command (current command) is limited.

When there is no normalized torque pattern coefficient value y(n+1)(m) exceeding the upper limit or the lower limit (step S14: NO), the normalized torque pattern adjustment unit 26 actually controls the motor 2 for a predetermined time using the candidate for the normalized torque pattern y(n) in the (n+1)th adjustment, and calculates an evaluation value Jωm(n+1) (step S15).

Next, the normalized torque pattern adjustment unit 26 compares the evaluation value Jωm(n+1) to the evaluation value Jωm(n) and determines whether or not the evaluation value Jωm(n+1) is smaller than the evaluation value Jωm(n) (step S16). In a case where the evaluation value Jωm(n+1) is not smaller than the evaluation value Jωm(n) (step S16: NO), the normalized torque pattern adjustment unit 26 discards the candidate for the normalized torque pattern y(n+1) in the (n+1)th adjustment (step S17), returns to step S11, and calculates a new pseudo-random number A (step S11). In a case where the evaluation value Jωm(n+1) is smaller than the evaluation value Jωm(n) (step S16: YES), the normalized torque pattern adjustment unit 26 adopts the candidate for the normalized torque pattern y(n+1) in the (n+1)th adjustment as a next reference (step S18), and ends the processing shown in Fig. 4.

Fig. 5 shows an example of adjustment of the normalized torque pattern. Fig. 5 shows an example of adjustment of the n-th normalized pattern y(n) (broken line) shown in Fig. 3 when a pseudo-random number A = 604 and an adjustment width $\Delta y$ = 30 [%] are set as an example. The normalized pattern change amount $\Delta y(n+1)$ is indicated by a chain line, and the (n+1)th normalized pattern y(n+1) is indicated by a solid line.

(Actions and Effects)

According to the present embodiment, since the effective value of the speed variation is obtained and the load torque pattern can be adjusted to reduce the speed variation, the speed variation can be suppressed including the harmonic components of the load variation without obtaining the individual harmonic components. In addition, by adjusting the plurality of coefficient values constituting the normalized torque pattern based on the random numbers, it is possible to automatically generate a plurality of change patterns and flexibly adjust the normalized torque pattern.

(Modification Example)

In the above description, the evaluation value $J\omega m$ is calculated based on the deviation $\Delta\omega m$, but may also be, for example, a value based on the estimated rotation speed variation width of the motor (a difference between a maximum rotation speed and a minimum rotation speed during one rotation of the motor 2).

<Second Embodiment>

The second embodiment is different from the first embodiment in the configuration of the normalized torque pattern table 131. Fig. 6 shows a configuration example of a normalized torque pattern table 131a (corresponding to the normalized torque pattern table 131 shown in Fig. 2). In addition, Fig. 7 shows an example of a relationship between the rotor rotational angle and the plurality of coefficient values (black circles), in which a horizontal axis represents the rotor rotational angle [deg] and a vertical axis represents the coefficient value [%]. In the first embodiment, the coefficient value (table value) is constant, for example, between 0 and 30 [deg]. However, in the second embodiment, the coefficient value (table value) is defined at a value of 15 [deg] at the center, and linear interpolation between adjacent coefficient values (table values) is performed to obtain an interpolated value as indicated by a broken line. In this case, the interpolated value is a value connecting center values, so that the average value does not change. That is, a normalized pattern is shown.

<Third Embodiment>

Fig. 8 shows a configuration example of a control device 1a according to a third embodiment of the present disclosure. The control device 1a of the third embodiment further changes an adjustment value $\Delta\theta es$ of the rotational position as one of parameters of the normalized torque pattern. The control device 1a shown in Fig. 8 is different from the control device 1 shown in Fig. 1 in that a configuration of a normalized torque pattern adjustment unit 26a shown in Fig. 8 corresponding to the normalized torque pattern adjustment unit 26 shown in Fig. 1 is partially different and a new addition unit 27 is provided. The addition unit 27 adds the rotational position $\theta es$ output by the speed/position estimation unit 11 and the $\Delta\theta es$ output by the normalized torque pattern adjustment unit 26a, and inputs an addition result to the load torque compensation unit 13 instead of the rotational position $\theta es$ in the first embodiment. The normalized torque pattern adjustment unit 26a has a function of changing and outputting the adjustment value $\Delta\theta es$ while monitoring the evaluation value $J\omega m$ in addition to the function of adjusting the normalized torque pattern by the normalized torque pattern adjustment unit 26. According to the third embodiment, for example, the current control can be delayed with respect to the torque command (current command). Therefore, it is possible to compensate for a delay in the output torque.

<Fourth Embodiment>

In the fourth embodiment, compared to the first embodiment, instead of determining the normalized torque pattern y(n+1) using the random number A, adjustment is performed only with six consecutive values (12 ways such as A = 001111110000 and A = 000011111100 (binary)) of $\Delta y'(n+1)$ for adjusting a fundamental wave. According to this configuration, the fundamental wave can be adjusted. Similarly, a second-order component can be adjusted through adjustment only with three consecutive values (six ways such as A = 001110001110 and A = 110001110001 (binary)) of $\Delta y'(n+1)$ for adjusting the second-order component, and a third-order component can be adjusted through adjustment only with two consecutive values (four ways such as A = 001100110011 and A = 100110011001 (binary)).

In the present embodiment, while the normalized torque pattern adjustment unit 26 shown in Fig. 1 individually adjusts the plurality of coefficient values by using any of the plurality of bit patterns each having the number of bits based on the number of the plurality of coefficient values constituting the normalized torque pattern, in the fourth embodiment, the bit pattern is generated by sequentially combining a first number of consecutive "1" bits and a second number of consecutive "0" bits. With this configuration, for example, only a specific order can be adjusted.

<Fifth Embodiment>

Fig. 9 shows a configuration example of a control device 1b according to a fifth embodiment of the present disclosure. The control device 1b shown in Fig. 9 is different from the control device 1 according to the first embodiment described with reference to Fig. 1 and the like in the following points. That is, the control device 1b shown in Fig. 9 is different from the control device 1 shown in Fig. 1 in a part of a configuration of a speed control unit 20b corresponding to the speed control unit 20 shown in Fig. 1. In addition, a part of an operation of a normalized torque pattern adjustment unit 26b corresponding to the normalized torque pattern adjustment unit 26 shown in Fig. 1 is different.

In the fifth embodiment, the maximum values (upper limit and lower limit) (step S14 in Fig. 4) set for the normalized torque pattern coefficient value y(n)(m) in the first embodiment are calculated based on the average torque command value which is an output of the speed PI control unit 12. In Fig. 9, the output of the speed PI control unit 12 is denoted by an average torque command value pre_τ_cmd. In addition, an input to the current conversion unit 16 is denoted by an output torque command value τ_cmd. In addition, an output of the load torque compensation unit 13 is denoted by a compensation torque value τ_cmp. In addition, in the fifth embodiment, a maximum value of the output torque command value τ_cmd obtained from a value having a predetermined margin from a maximum value of an instantaneous current that can be flowed from a current capacity of the switching element (hereinafter, referred to as "element") of the inverter 4 to the element is set as an output torque command maximum value τ_max. In this case, a maximum value y_max of the normalized torque pattern coefficient value y(n)(m) can be calculated from the average torque command value pre_τ_cmd and the output torque command maximum value τ_max by using Equation (6).

$$y_{max}[\%] = (\tau_{max} / {}^{pre}\tau_{cmd} - 1) \times 100[\%] \quad \cdots (6)$$

When the normalized torque pattern y(n) is adjusted, the normalized torque pattern coefficient value y(n)(m) is limited based on a current limit of the element of the inverter 4, thereby preventing the need to increase the current capacity of the element, for example.

In the fifth embodiment, as in the first embodiment, in order to compensate for the variation in the load torque, the load torque compensation unit 13 calculates the compensation torque value τ_cmp by multiplying the average torque command value pre_τ_cmd, which is the output of the speed PI control unit 12, by the value of the normalized torque pattern table 131. Then, the addition unit 15 adds the compensation torque value τ_cmp to the average torque command value pre_τ_cmd to obtain the torque command value τ_cmd input to the current change unit 16. In the fifth embodiment, a limiter 29 is provided to an output of the addition unit 15 to limit the torque command value τ_cmd to the output torque command maximum value τ_max.

The limiter 29 receives as an input the output of the addition unit 15, limits the upper limit of the output torque command value τ_cmd to +τ_max, limits the lower limit to -τ_max, and outputs the result to the current conversion unit 16. As described above, τ_max is the maximum value of the output torque command set according to a maximum rated current or the like of the switching element included in the inverter 4.

In addition, in the fifth embodiment, when the normalized torque pattern y(n), which is currently used as a reference, is compared to the normalized torque pattern y(n+1), which is a candidate for the next reference, the average torque command value pre_τ_cmd is set to the same value. For this reason, the speed control unit 20b of the fifth embodiment newly includes a zero-order holder 28. The zero-order holder 28 receives as an input the average torque command value pre_τ_cmd output by the speed PI control unit 12, performs, while the normalized torque pattern adjustment unit 26b compares the speed variation caused by the current normalized torque pattern y(n) to the speed variation caused by the candidate for the next normalized torque pattern y(n+1), sample-and-hold for each comparison timing such that the same average torque command value pre_τ_cmd is used for calculating the compensation torque value τ_cmp in the load torque compensation unit 13, and outputs the same value to the load torque compensation unit 13. In addition, when the speed variation is not compared, the zero-order holder 28 outputs the average torque command value pre_τ_cmd output by the speed PI control unit 12 to the load torque compensation unit 13 as it is.

When the variation in the average torque command value pre_τ_cmd is relatively large, y_max obtained from the average torque command value pre_τ_cmd also varies. Therefore, in the present embodiment, while the speed variation with respect to the normalized torque pattern is compared, the average torque command value pre_τ_cmd is set to the same value, so that the speed variation can be compared using the same y_max.

The speed control unit 20b according to the fifth embodiment is different in that the zero-order holder 28 and the limiter 29 are newly provided, but is the same as the speed control unit 20 shown in Fig. 1 in other configurations and operations.

Next, an operation example of the normalized torque pattern adjustment unit 26b of the fifth embodiment will be described with reference to Fig. 10. The description of the same parts as those of the first embodiment will be omitted as appropriate.

Fig. 10 shows the operation example of the normalized torque pattern adjustment unit 26b. The normalized torque pattern adjustment unit 26b starts processing shown in Fig. 10 when a predetermined condition is satisfied. In the processing shown in Fig. 10, the normalized torque pattern adjustment unit 26b adjusts each coefficient value y(n)(m) of the normalized torque pattern y(n) set in the normalized pattern table 131 to generate a candidate for the next normalized torque pattern y(n+1), evaluates the normalized torque pattern y(n+1) based on the predetermined evaluation value related to the variations in the rotation speed, and determines whether to adopt the normalized torque pattern y(n+1) or to adopt the normalized torque pattern y(n) as it is. The predetermined condition in a case where the processing shown in Fig. 10 is started is, for example, elapse of a certain time, the evaluation value being equal to or greater than a predetermined threshold value (in a case where the smaller the evaluation value, the smaller the variation width), or in a case where the newly generated normalized torque pattern y(n+1) is rejected, elapse of a predetermined time after the rejection. The number of divisions of the normalized torque pattern table 131 is assumed to be 12 shown in Figs. 2 and 3.

When the processing shown in Fig. 10 is started, the normalized torque pattern adjustment unit 26b causes the zero-order holder 28 to hold the average torque command value pre_τ_cmd (step S20). Next, the normalized torque pattern adjustment unit 26b actually controls the motor 2 for a predetermined time using the normalized torque pattern y(n) in an n-th adjustment before adjustment, which is currently used as the reference, and calculates the evaluation value Jωm(n) of Equation (1) (step S21).

Next, the normalized torque pattern adjustment unit 26b calculates a pseudo-random number A, which is a bit pattern having the number of bits based on the number of the plurality of coefficient values (12 in the example shown in Figs. 2 and 3) constituting the normalized torque pattern (step S22).

Next, the normalized torque pattern adjustment unit 26b calculates a provisional change amount Δy'(n+1)(m) (= Δy'(n+1)(0) to Δy'(n+1)(11)) based on the pseudo-random number A before a process of making the total value of the coefficient values zero is performed, on the basis of the pseudo-random number A using Equation (2) (step S23).

Next, the normalized torque pattern adjustment unit 26b calculates a provisional normalized torque pattern y'(n+1) (= y'(n+1)(0) to y'(n+1)(11)) in the (n+1)th adjustment in a case of correction with the change amount Δy'(n+1) using Equation (7) (step S24).

$$y'_{(n+1)}(m) = y_{(n)}(m) + \Delta y'_{(n+1)}(m) \quad \cdots (7)$$

Next, the normalized torque pattern adjustment unit 26b calculates the maximum value y_max of each coefficient value y'(n+1)(m) based on the average torque command value pre_τ_cmd using Equation (6) (step S25).

Next, the normalized torque pattern adjustment unit 26b determines whether or not each coefficient value Δy'(n+1)(m) (= Δy'(n+1)(0) to Δy'(n+1)(11)) is within a range of +y_max to -y_max, and in a case where the coefficient value Δy'(n+1)(m) is within the range of -ymax to +ymax, adopts the pattern change amount Δy'(n+1)(m) due to the integer A as it is. In a case where the coefficient value Δy'(n+1)(m) is outside of the range, the normalized torque pattern adjustment unit 26b calculates the change amount Δy'(n+1)(m) using Equation (8) (step S26). Here, Equation (8) is an equation in which the sign of the right side of Equation (2) is inverted.

$$\Delta y'_{(n+1)}(m) = -\{2 \times \mathrm{mod}(\mathrm{int}(A/2^m), 2) - 1\} \quad \cdots (8)$$

Next, the normalized torque pattern adjustment unit 26b calculates a candidate for the normalized torque pattern y(n+1) in the (n+1)th adjustment based on the change amount Δy(n+1) using Equations (3) to (5) (step S27). By obtaining the normalized pattern y(n+1) from the normalized pattern change amount Δy(n+1) using Equation (5), the value of the normalized pattern can be kept within the range of - ymax to +ymax.

Next, the normalized torque pattern adjustment unit 26b actually controls the motor 2 for a predetermined time using the candidate of the normalized torque pattern y(n) in the (n+1)th adjustment, and calculates the evaluation value Jωm(n+1) (step S28).

Next, the normalized torque pattern adjustment unit 26b compares the evaluation value Jωm(n+1) to the evaluation value Jωm(n) and determines whether or not the evaluation value Jωm(n+1) is smaller than the evaluation value Jωm(n) (step S29). On the other hand, in a case where the evaluation value Jωm(n+1) is not smaller than the evaluation value Jωm(n) (step S29: NO), the normalized torque pattern adjustment unit 26b discards the candidate for the normalized torque pattern y(n+1) in the (n+1)th adjustment and adopts the normalized torque pattern y(n) in the n-th adjustment as the next reference (step S30). On the other hand, in a case where the evaluation value Jωm(n+1) is smaller than the evaluation value Jωm(n) (step S29: YES), the normalized torque pattern adjustment unit 26b adopts the candidate for the normalized torque pattern y(n+1) in the (n+1)th adjustment as the next reference (step S31).

After step S30 or step S31, the normalized torque pattern adjustment unit 26b releases the hold of the average torque command value pre_τ_cmd in the zero-order holder 28 (step S32), and ends the processing shown in Fig. 10.

(Actions and Effects)

In a case where the normalized torque pattern is not limited based on the output torque command maximum value τ_max unlike the present embodiment, for example, when the average torque command value pre_τ_cmd is relatively large, the output torque command value τ_cmd becomes larger than the output torque command maximum value τ_max, and the compensation is not performed according to the compensation torque value τ_cmp. In this case, it is conceivable that even though the normalized torque pattern is changed for adjustment, the change may not be reflected in the speed variation. In this case, it is conceivable that the normalized torque pattern cannot be adjusted. Contrary to this, in the present embodiment, since the change amount Δy is limited based on the average torque command value pre_τ_cmd and the maximum value τ_max, it is possible to compare the normalized torque pattern before and after the change based on the speed variation. In this case, in the control device 1b of the present embodiment, the coefficient value y(n+1)(m) of the normalized torque pattern is adjusted to fall within a range of the maximum value y_max of the coefficient value based on the average torque command value pre_τ_cmd (average output torque command value) and the maximum value τ_max of the output torque command value τ_cmd corresponding to the element of the inverter 4.

In addition, in the present embodiment, when the comparison is performed using the evaluation value Jωm, the value of the average torque command value pre_τ_cmd is held at the same value. Therefore, even in a case where the variation in the average torque command value pre_τ_cmd is relatively large, the comparison using the evaluation value Jωm can be performed with high accuracy. In this case, the control device 1b of the present embodiment performs the calculation of the evaluation value Jωm(n) using the normalized torque pattern y(n) before adjustment and the calculation of the evaluation value Jωm(n+1) using the normalized torque pattern y(n+1) after adjustment, by using the same average torque command value pre_τ_cmd (average output torque command value).

(Modification Example)

In the fifth embodiment, as in the first embodiment, the configurations described as the second to fourth embodiments can be combined.

<Actions and Effects>

In the control device, the control method, and the air conditioner of each of the above-described embodiments, a normalized torque pattern before adjustment is compared to a normalized torque pattern after adjustment, which is a normalized torque pattern in which a plurality of coefficient values are individually adjusted using any of a plurality of bit patterns each having the number of bits based on the number of the plurality of coefficient values constituting the normalized torque pattern, on the basis of each calculation result of a predetermined evaluation value related to variations in a rotation speed obtained as a result of actually using the normalized torque pattern to control a motor, and any one of the normalized torque patterns is adopted. Therefore, the normalized torque pattern can be appropriately adjusted.

<Other Embodiments>

While the embodiments of the present disclosure have been described above in detail with reference to the drawings, the specific configuration is not limited to the embodiments, and includes design changes and the like within a scope not departing from the gist of the present disclosure. In the above-described embodiment, the rotational position, the rotation speed, and the like are estimated based on a current value and the like without being detected by using a sensor.

However, the rotational position, the rotation speed, and the like may be detected by using a sensor. In addition, the current value is not limited to the detection of an AC current using the sensor, and the AC current may be estimated by detecting, for example, a DC current input to an inverter circuit.

<Computer Configuration>

Fig. 11 is a schematic block diagram showing a configuration of a computer according to at least one embodiment.

A computer 90 includes a processor 91, a main memory 92, a storage 93, and an interface 94.

The control devices 1, 1a, and 1b described above are mounted in the computer 90. An operation of each processing unit described above is stored in the storage 93 in the form of a program. The processor 91 reads out the program from the storage 93, loads the program into the main memory 92, and executes the above process according to the program. In addition, the processor 91 secures a storage area corresponding to each storage unit described above in the main memory 92 according to the program.

The program may be intended to realize some of functions performed by the computer 90. For example, the program may exhibit its function by using a combination with other programs already stored in the storage or by using a combination with other programs implemented on other devices. In another embodiment, the computer may include a custom large scale integrated (LSI) circuit such as a programmable logic device (PLD) in addition to or instead of the above configuration. Examples of the PLD include a programmable array logic (PAL), a generic array logic (GAL), a complex programmable logic device (CPLD), and a field programmable gate array (FPGA). In this case, some or all of the functions implemented by the processor may be realized by the integrated circuit.

Examples of the storage 93 include a hard disk drive (HDD), a solid state drive (SSD), a magnetic disk, a magneto-optical disk, a compact disc read only memory (CD-ROM), a digital versatile disc read only memory (DVD-ROM), and a semiconductor memory. The storage 93 may be an internal medium directly connected to a bus in the computer 90 or may be an external medium connected to the computer 90 via an interface 94 or via a communication line. In a case where the program is distributed to the computer 90 through the communication line, the computer 90 that receives the distribution may load the program into the main memory 92 and execute the above process. In at least one embodiment, the storage 93 is a non-transitory tangible storage medium.

<Supplementary Notes>

The control devices 1, 1a, and 1b described in each embodiment are understood as follows, for example.

(1) The control devices 1, 1a, and 1b according to a first aspect are the control devices 1, 1a, and 1b for controlling a rotation speed of a motor 2 that rotationally drives a compressor 5 by controlling an inverter 4 that AC-drives the motor 2, in which the control device calculates a compensation torque value ($\tau$_cmp) by multiplying an average output torque command value (average torque command value pre_$\tau$_cmd) calculated according to a deviation $\Delta\omega$m between the rotation speed $\omega$mes of the motor 2 and a rotation speed command value $\omega$m* by a normalized torque pattern y(n), which is a pattern of a plurality of coefficient values y(n)(m) that change according to a rotational angle $\theta$es of the motor 2 and that are set such that a total value for one rotation is zero, and sets an output torque command value ($\tau$_cmd) of the motor 2 according to the rotational angle $\theta$es by adding the compensation torque value to the average output torque command value to control the inverter 4, and the control device compares the normalized torque pattern y(n) before adjustment to a normalized torque pattern y(n+1) after adjustment, which is the normalized torque pattern in which the plurality of coefficient values are individually adjusted using any of a plurality of bit patterns each having the number of bits based on the number of the plurality of coefficient values y(n)(m), on the basis of each calculation result of a predetermined evaluation value J$\omega$m related to variations in the rotation speed $\omega$m obtained as a result of actually using the normalized torque pattern to control the motor 2, and adopts any one of the normalized torque patterns. According to the present aspect and each of the following aspects, the normalized torque pattern can be appropriately adjusted.

(2) The control devices 1, 1a, and 1b according to a second aspect are the control devices 1, 1a, and 1b of (1), in which the plurality of bit patterns are a pseudo-random number sequence. According to this aspect, a plurality of adjustment patterns do not need to be prepared in advance.

(3) The control devices 1, 1a, and 1b according to a third aspect are the control devices 1, 1a, and 1b of (1) or (2), in which the evaluation value is a squared value $\Delta\omega m^2$ of a time-series value of the deviation or a value obtained by removing a predetermined high-frequency component from the time-series value $\Delta\omega$m of the deviation.

(4) The control devices 1 and 1a according to a fourth aspect are the control devices 1 and 1a of (1) to (3), in which an upper limit and a lower limit are set for the coefficient value, and in a case where any of the plurality of coefficient values exceeds the upper limit or the lower limit, the normalized torque pattern is not used as the normalized torque pattern after adjustment.

(5) The control devices 1, 1a, and 1b according to a fifth aspect are the control devices 1, 1a, and 1b according to (1) to (4), in which when the evaluation value is calculated by actually controlling the motor using the normalized torque pattern after adjustment, an estimated value θes of the rotational angle of the motor is further changed.

(6) The control devices 1, 1a, and 1b according to a sixth aspect are the control devices 1, 1a, and 1b of (1) and (3) to (5), in which the bit pattern is generated by sequentially combining a first number of consecutive "1" bits and a second number of consecutive "0" bits.

(7) The control device 1b according to a seventh aspect is the control device 1b of (1), (2), (3), (5), and (6), in which the coefficient value is adjusted to fall within a range of a maximum value of the coefficient value based on the average output torque command value and a maximum value of the output torque command value corresponding to an element of the inverter.

(8) The control device 1b according to an eighth aspect is the control device 1b of (1) to (7), in which calculation of the evaluation value using the normalized torque pattern before adjustment and calculation of the evaluation value using the normalized torque pattern after adjustment are performed by using the same average output torque command value.

Industrial Applicability

According to each aspect of the present invention, the normalized torque pattern can be appropriately adjusted.

Reference Signs List

1, 1a: control device
2: motor
3: AC power supply
4: inverter
5: compressor
10: current sensor
11: speed/position estimation unit
12: speed PI control unit
13: load torque compensation unit
14: subtraction unit
15: addition unit
16: current conversion unit
17: subtraction unit
18: current PI control unit
20, 20b: speed control unit
26, 26a, 26b: normalized torque pattern adjustment unit
27: addition unit
28: zero-order holder
29: limiter
100: air conditioner
131, 131a: normalized torque pattern table

## Claims

**1.** A control device for controlling a rotation speed of a motor that rotationally drives a compressor by controlling an inverter that AC-drives the motor,

wherein the control device calculates a compensation torque value by multiplying an average output torque command value calculated according to a deviation between the rotation speed of the motor and a rotation speed command value by a normalized torque pattern, which is a pattern of a plurality of coefficient values that change according to a rotational angle of the motor and that are set such that a total value for one rotation is zero, and sets an output torque command value of the motor according to the rotational angle by adding the compensation torque value to the average output torque command value to control the inverter, and

the control device compares the normalized torque pattern before adjustment to a normalized torque pattern after adjustment, which is the normalized torque pattern in which the plurality of coefficient values are individually adjusted using any of a plurality of bit patterns each having the number of bits based on the number of the plurality of coefficient values, on the basis of each calculation result of a predetermined evaluation value related to variations in the rotation speed obtained as a result of actually using the normalized torque pattern to control the motor, and adopts any one of the normalized torque patterns.

**2.** The control device according to Claim 1,
wherein the plurality of bit patterns are a pseudo-random number sequence.

**3.** The control device according to Claim 2,
wherein the evaluation value is a squared value of a time-series value of the deviation or a value obtained by removing a predetermined high-frequency component from the time-series value of the deviation.

**4.** The control device according to Claim 3,

wherein an upper limit and a lower limit are set for the coefficient value, and
in a case where any of the plurality of coefficient values exceeds the upper limit or the lower limit, the normalized torque pattern is not used as the normalized torque pattern after adjustment.

**5.** The control device according to Claim 4,
wherein when the evaluation value is calculated by actually controlling the motor using the normalized torque pattern after adjustment, an estimated value of the rotational angle of the motor is further changed.

**6.** The control device according to Claims 1, 3, 4, or 5,
wherein the bit pattern is generated by sequentially combining a first number of consecutive "1" bits and a second number of consecutive "0" bits.

**7.** The control device according to Claims 1, 2, 3, or 5,
wherein the coefficient value is adjusted to fall within a range of a maximum value of the coefficient value based on the average output torque command value and a maximum value of the output torque command value corresponding to an element of the inverter.

**8.** The control device according to Claim 7,
wherein calculation of the evaluation value using the normalized torque pattern before adjustment and calculation of the evaluation value using the normalized torque pattern after adjustment are performed by using the same average output torque command value.

**9.** A control method for controlling a rotation speed of a motor that rotationally drives a compressor by controlling an inverter that AC-drives the motor, the control method comprising:

calculating a compensation torque value by multiplying an average output torque command value calculated according to a deviation between the rotation speed of the motor and a rotation speed command value by a normalized torque pattern, which is a pattern of a plurality of coefficient values that change according to a rotational angle of the motor and that are set such that a total value for one rotation is zero, and setting an output torque command value of the motor according to the rotational angle by adding the compensation torque value to the average output torque command value to control the inverter; and
comparing the normalized torque pattern before adjustment to a normalized torque pattern after adjustment, which is the normalized torque pattern in which the plurality of coefficient values are individually adjusted using any of a plurality of bit patterns each having the number of bits based on the number of the plurality of coefficient values, on the basis of each calculation result of a predetermined evaluation value related to variations in the rotation speed obtained as a result of actually using the normalized torque pattern to control the motor, and adopting any one of the normalized torque patterns.

**10.** An air conditioner comprising:

a compressor;
a motor that rotationally drives the compressor;

an inverter that AC-drives the motor; and

a control device that controls a rotation speed of the motor by controlling the inverter,

wherein the control device calculates a compensation torque value by multiplying an average output torque command value calculated according to a deviation between the rotation speed of the motor and a rotation speed command value by a normalized torque pattern, which is a pattern of a plurality of coefficient values that change according to a rotational angle of the motor and that are set such that a total value for one rotation is zero, and sets an output torque command value of the motor according to the rotational angle by adding the compensation torque value to the average output torque command value to control the inverter, and

the control device compares the normalized torque pattern before adjustment to a normalized torque pattern after adjustment, which is the normalized torque pattern in which the plurality of coefficient values are individually adjusted using any of a plurality of bit patterns each having the number of bits based on the number of the plurality of coefficient values, on the basis of each calculation result of a predetermined evaluation value related to variations in the rotation speed obtained as a result of actually using the normalized torque pattern to control the motor, and adopts any one of the normalized torque patterns.

FIG. 1

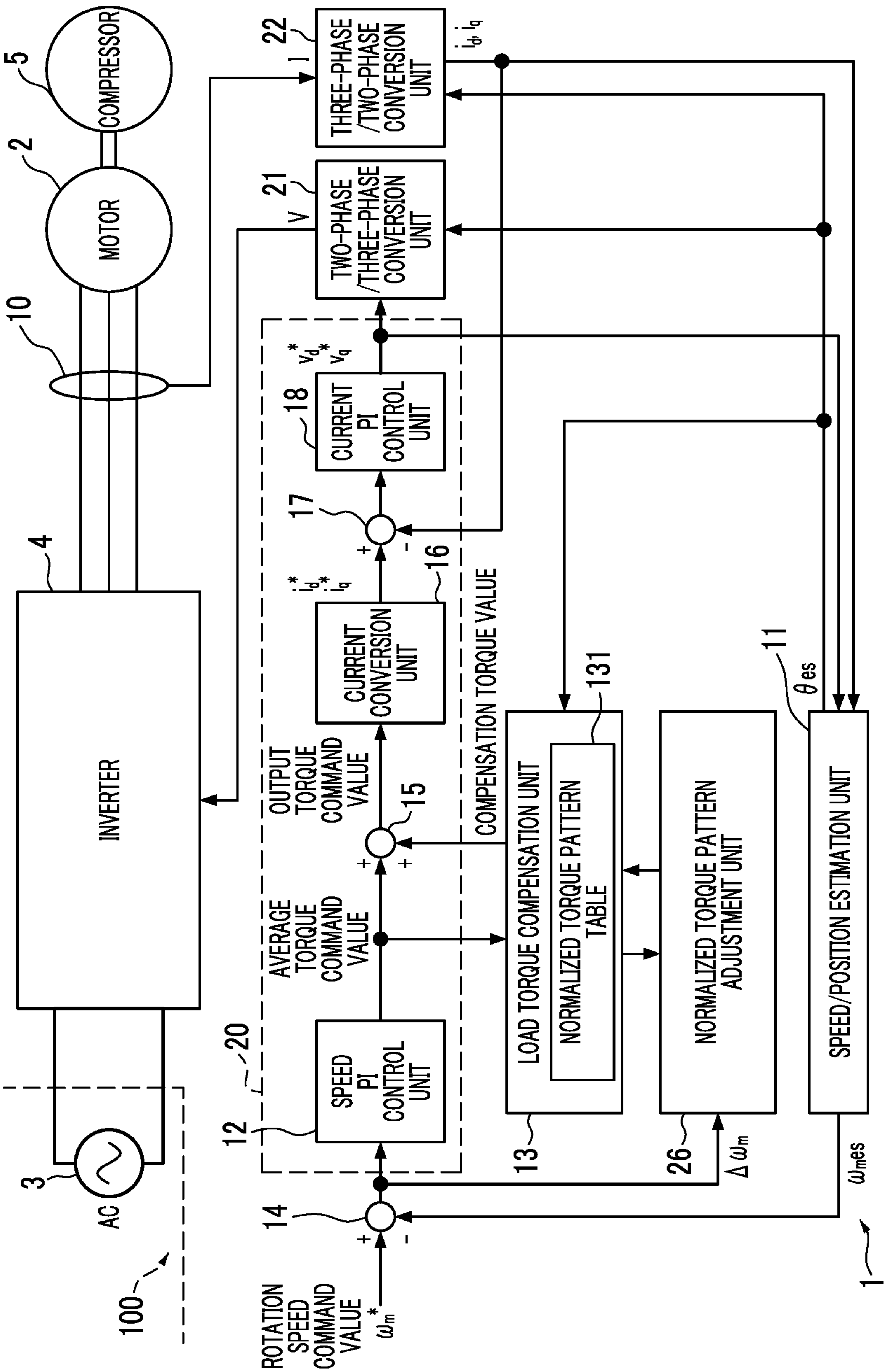
COMPRESSOR
MOTOR
INVERTER
AC
THREE-PHASE /TWO-PHASE CONVERSION UNIT
TWO-PHASE /THREE-PHASE CONVERSION UNIT
CURRENT PI CONTROL UNIT
CURRENT CONVERSION UNIT
SPEED PI CONTROL UNIT
OUTPUT TORQUE COMMAND VALUE
AVERAGE TORQUE COMMAND VALUE
COMPENSATION TORQUE VALUE
LOAD TORQUE COMPENSATION UNIT
NORMALIZED TORQUE PATTERN TABLE
NORMALIZED TORQUE PATTERN ADJUSTMENT UNIT
SPEED/POSITION ESTIMATION UNIT
ROTATION SPEED COMMAND VALUE
1
2
3
4
5
10
11
12
13
14
15
16
17
18
20
21
22
26
100
131

# FIG. 2

131

| ROTOR ROTATIONAL ANGLE [deg] | NORMALIZED TORQUE PATTERN $y_{(n)}$ [%] |
|---|---|
| 0 TO 30 | $y_{(n)}^{(0)}$ |
| 30 TO 60 | $y_{(n)}^{(1)}$ |
| ... | ... |
| 300 TO 330 | $y_{(n)}^{(10)}$ |
| 330 TO 360 | $y_{(n)}^{(11)}$ |

# FIG. 3

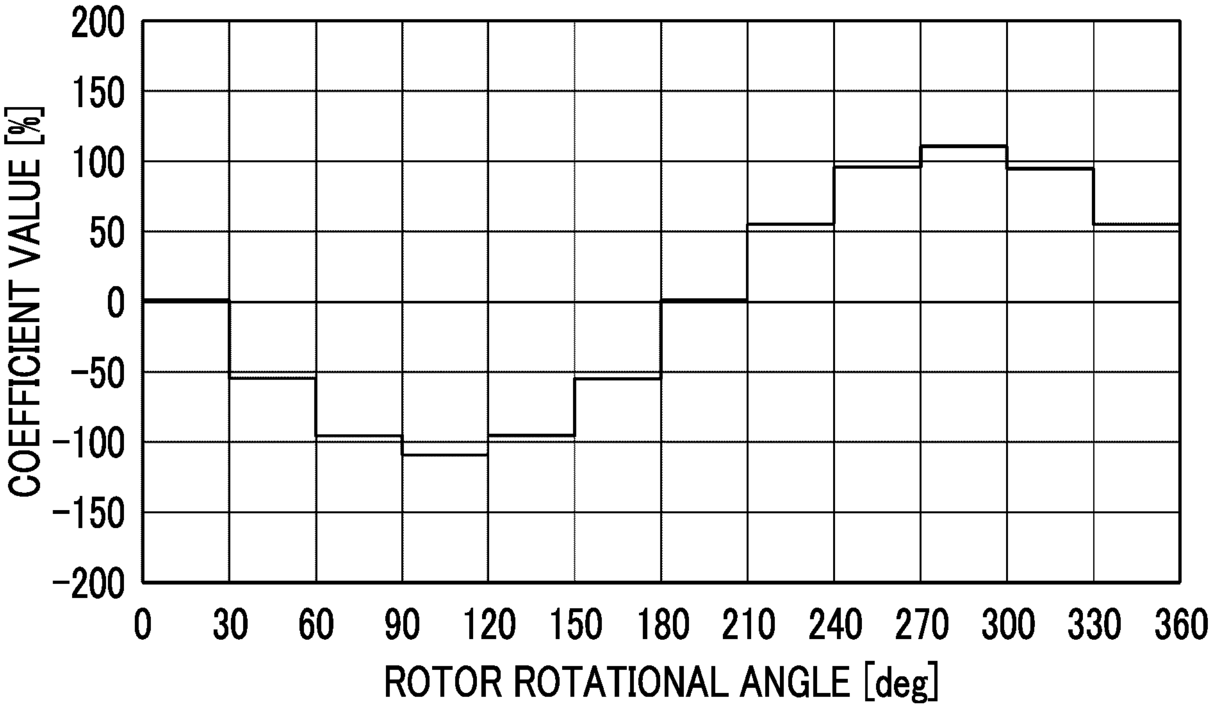

FIG. 4

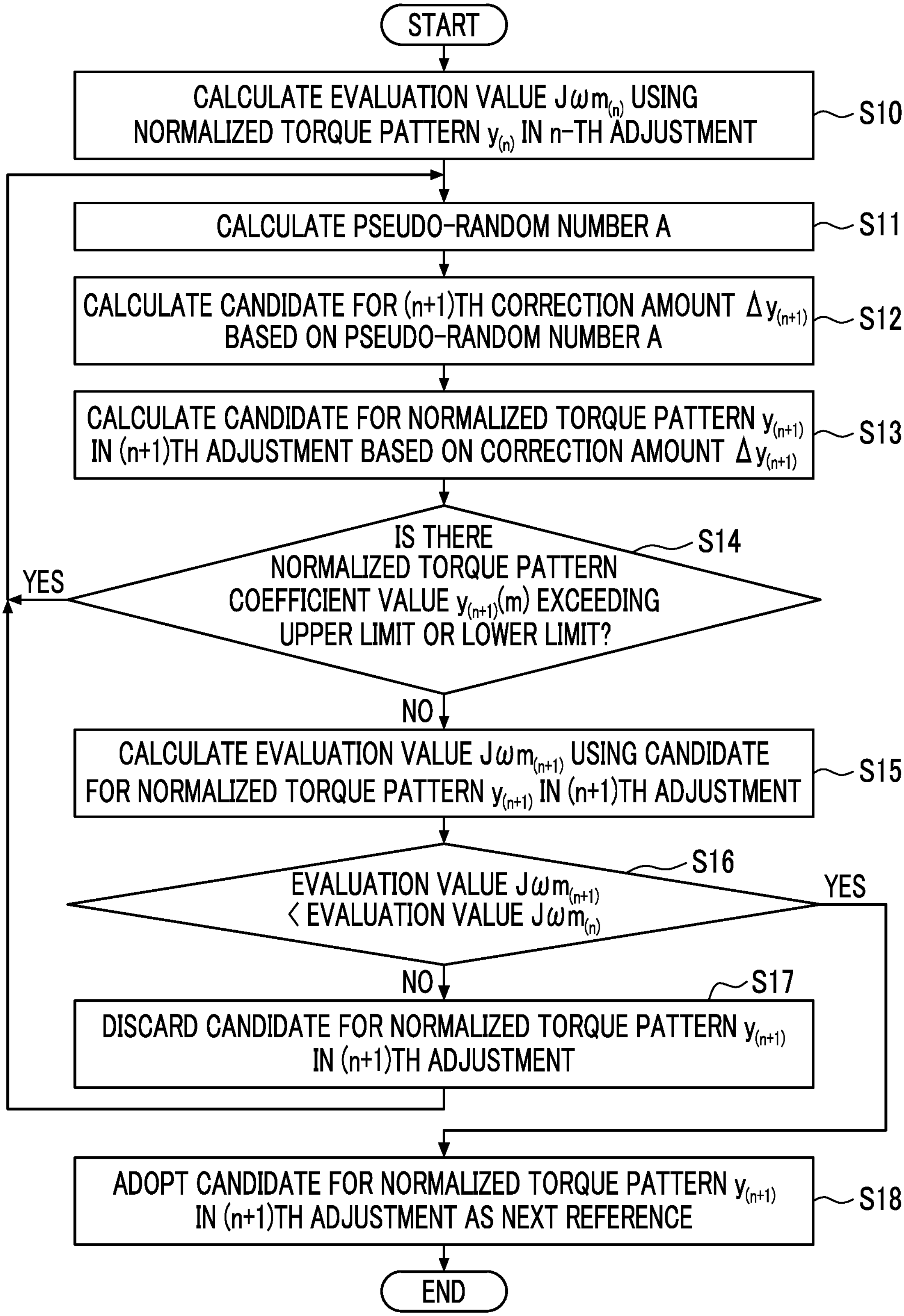
START
CALCULATE EVALUATION VALUE Jωm(n) USING NORMALIZED TORQUE PATTERN y(n) IN n-TH ADJUSTMENT
S10
CALCULATE PSEUDO-RANDOM NUMBER A
S11
CALCULATE CANDIDATE FOR (n+1)TH CORRECTION AMOUNT Δy(n+1) BASED ON PSEUDO-RANDOM NUMBER A
S12
CALCULATE CANDIDATE FOR NORMALIZED TORQUE PATTERN y(n+1) IN (n+1)TH ADJUSTMENT BASED ON CORRECTION AMOUNT Δy(n+1)
S13
IS THERE NORMALIZED TORQUE PATTERN COEFFICIENT VALUE y(n+1)(m) EXCEEDING UPPER LIMIT OR LOWER LIMIT?
S14
YES
NO
CALCULATE EVALUATION VALUE Jωm(n+1) USING CANDIDATE FOR NORMALIZED TORQUE PATTERN y(n+1) IN (n+1)TH ADJUSTMENT
S15
EVALUATION VALUE Jωm(n+1) < EVALUATION VALUE Jωm(n)
S16
YES
NO
S17
DISCARD CANDIDATE FOR NORMALIZED TORQUE PATTERN y(n+1) IN (n+1)TH ADJUSTMENT
ADOPT CANDIDATE FOR NORMALIZED TORQUE PATTERN y(n+1) IN (n+1)TH ADJUSTMENT AS NEXT REFERENCE
S18
END

FIG. 5

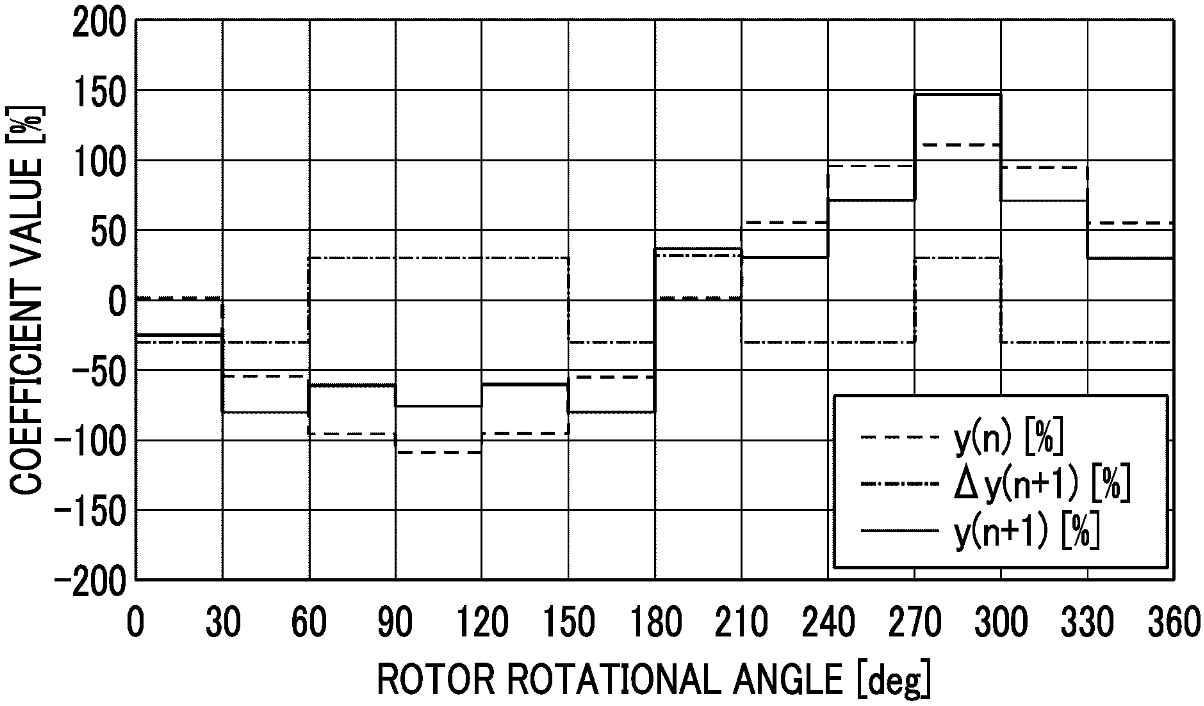


FIG. 6

131a

| ROTOR ROTATIONAL ANGLE [deg] | NORMALIZED TORQUE PATTERN $y_{(n)}$ [%] |
|---|---|
| 15 | $y_{(n)}^{(0)}$ |
| 45 | $y_{(n)}^{(1)}$ |
| ... | ... |
| 315 | $y_{(n)}^{(10)}$ |
| 345 | $y_{(n)}^{(11)}$ |

FIG. 7

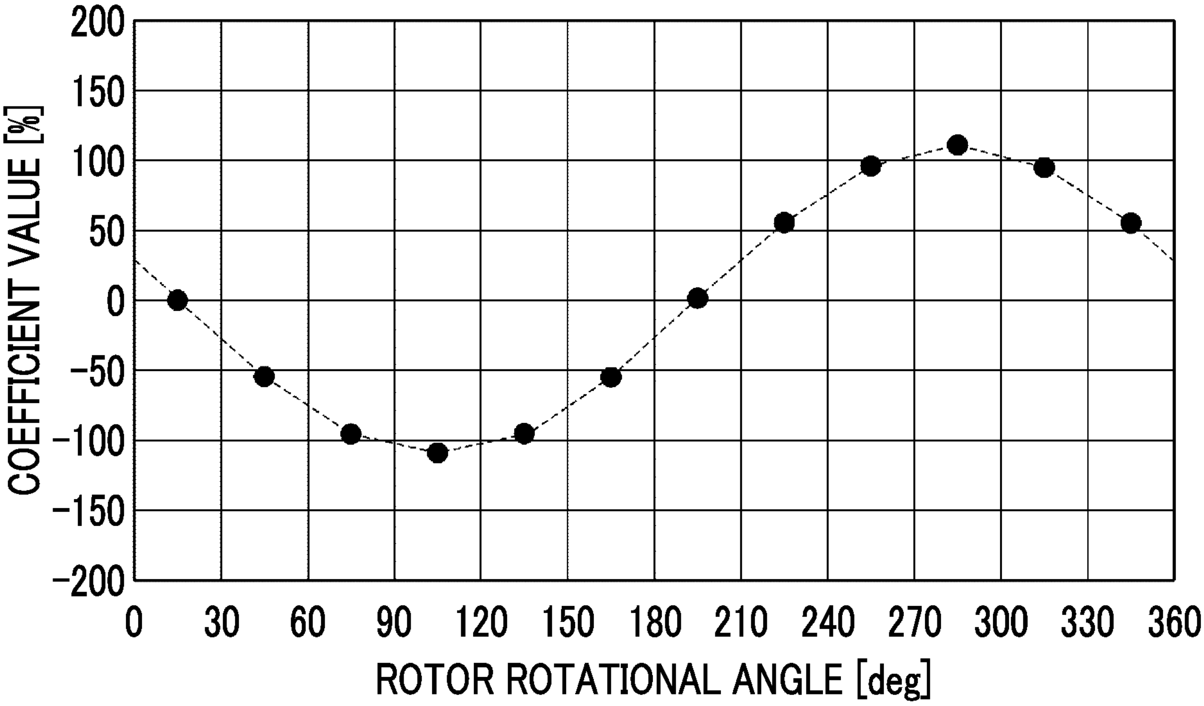
200
150
100
50
0
−50
−100
−150
−200
COEFFICIENT VALUE [%]
0
30
60
90
120
150
180
210
240
270
300
330
360
ROTOR ROTATIONAL ANGLE [deg]

FIG. 8

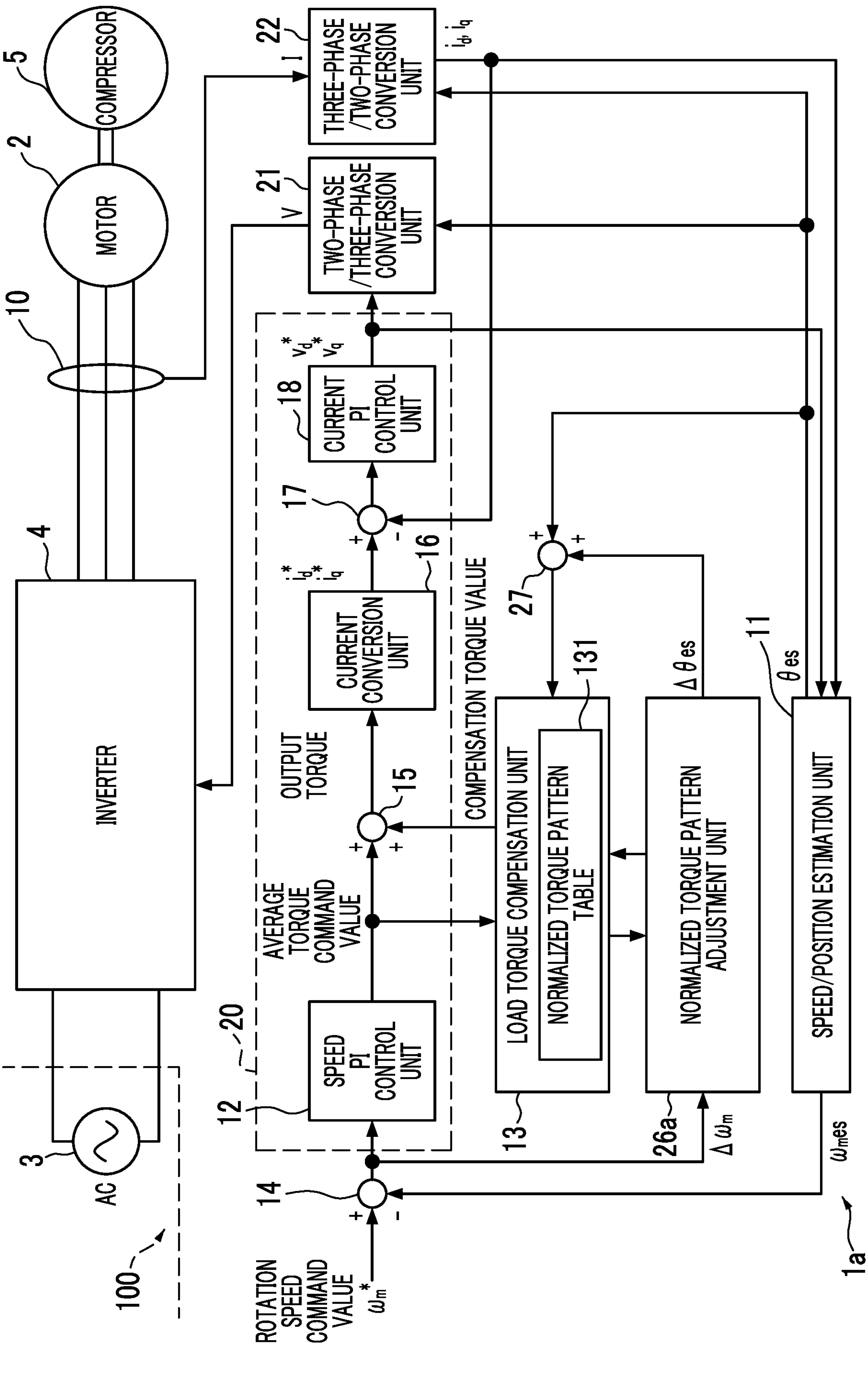

100
AC
3
INVERTER
4
10
MOTOR
2
COMPRESSOR
5
ROTATION SPEED COMMAND VALUE $\omega_m^*$
14
12
20
SPEED PI CONTROL UNIT
AVERAGE TORQUE COMMAND VALUE
15
OUTPUT TORQUE
CURRENT CONVERSION UNIT
16
$i_d^*$ $i_q^*$
17
CURRENT PI CONTROL UNIT
18
$v_d^*$ $v_q^*$
TWO-PHASE /THREE-PHASE CONVERSION UNIT
21
V
THREE-PHASE /TWO-PHASE CONVERSION UNIT
22
I
$i_d$, $i_q$
COMPENSATION TORQUE VALUE
27
LOAD TORQUE COMPENSATION UNIT
NORMALIZED TORQUE PATTERN TABLE
131
13
NORMALIZED TORQUE PATTERN ADJUSTMENT UNIT
26a
$\Delta\omega_m$
$\Delta\theta_{es}$
SPEED/POSITION ESTIMATION UNIT
11
$\theta_{es}$
$\omega_{mes}$
1a

FIG. 9

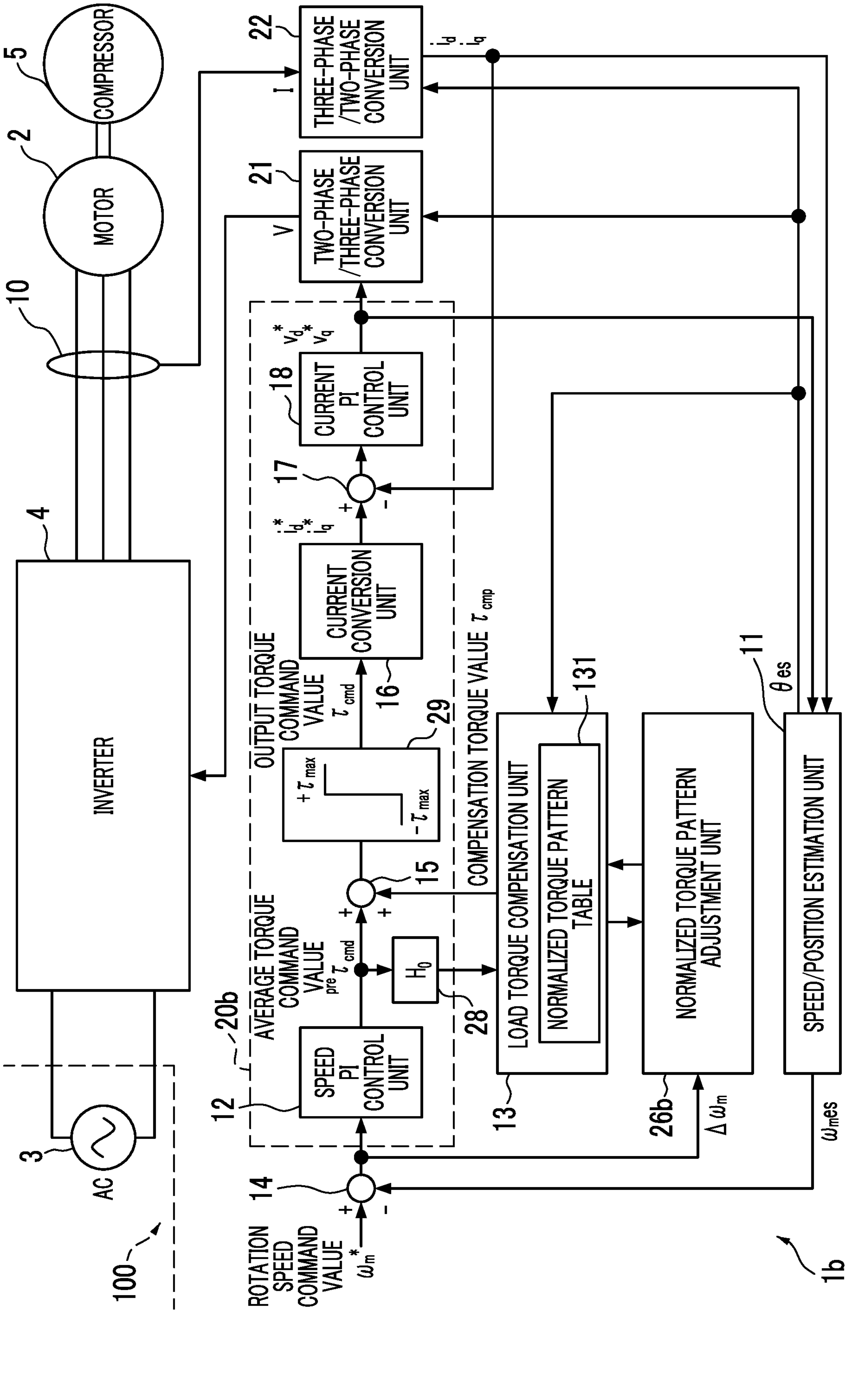
COMPRESSOR
MOTOR
INVERTER
AC
5
2
10
4
3
100
TWO-PHASE /THREE-PHASE CONVERSION UNIT
THREE-PHASE /TWO-PHASE CONVERSION UNIT
21
22
V
I
$i_d$
$i_q$
CURRENT PI CONTROL UNIT
18
$v_d^*$
$v_q^*$
17
CURRENT CONVERSION UNIT
16
$i_d^*$
$i_q^*$
OUTPUT TORQUE COMMAND VALUE $\tau_{cmd}$
29
$+\tau_{max}$
$-\tau_{max}$
15
COMPENSATION TORQUE VALUE $\tau_{cmp}$
AVERAGE TORQUE COMMAND VALUE $^{pre}\tau_{cmd}$
$H_0$
28
SPEED PI CONTROL UNIT
12
20b
14
ROTATION SPEED COMMAND VALUE $\omega_m^*$
LOAD TORQUE COMPENSATION UNIT
NORMALIZED TORQUE PATTERN TABLE
131
13
NORMALIZED TORQUE PATTERN ADJUSTMENT UNIT
26b
$\Delta\omega_m$
SPEED/POSITION ESTIMATION UNIT
11
$\theta_{es}$
$\omega_{mes}$
1b

FIG. 10

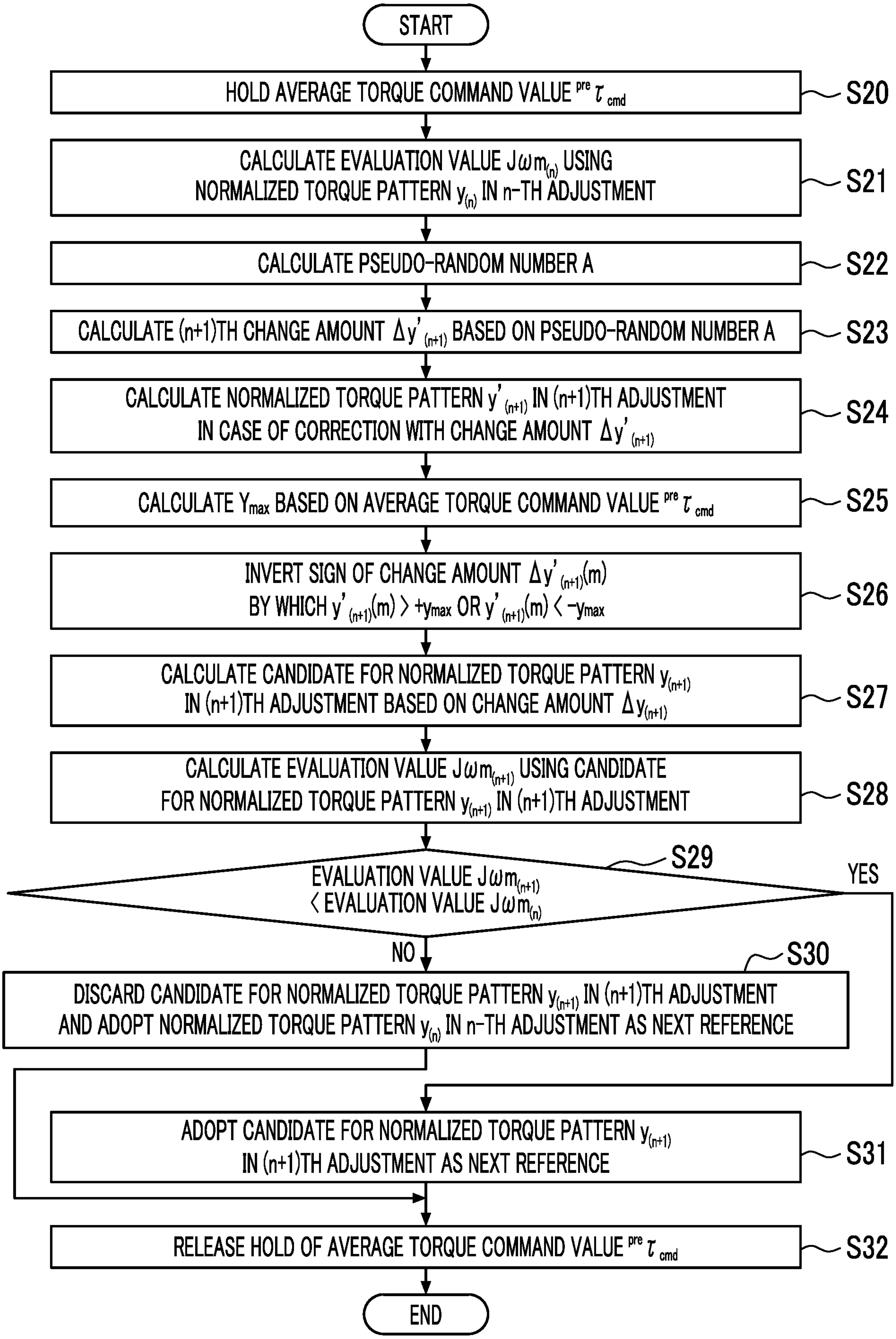
START
HOLD AVERAGE TORQUE COMMAND VALUE $^{pre}\tau_{cmd}$
S20
CALCULATE EVALUATION VALUE $J\omega m_{(n)}$ USING NORMALIZED TORQUE PATTERN $y_{(n)}$ IN n-TH ADJUSTMENT
S21
CALCULATE PSEUDO-RANDOM NUMBER A
S22
CALCULATE (n+1)TH CHANGE AMOUNT $\Delta y'_{(n+1)}$ BASED ON PSEUDO-RANDOM NUMBER A
S23
CALCULATE NORMALIZED TORQUE PATTERN $y'_{(n+1)}$ IN (n+1)TH ADJUSTMENT IN CASE OF CORRECTION WITH CHANGE AMOUNT $\Delta y'_{(n+1)}$
S24
CALCULATE $Y_{max}$ BASED ON AVERAGE TORQUE COMMAND VALUE $^{pre}\tau_{cmd}$
S25
INVERT SIGN OF CHANGE AMOUNT $\Delta y'_{(n+1)}(m)$ BY WHICH $y'_{(n+1)}(m) > +y_{max}$ OR $y'_{(n+1)}(m) < -y_{max}$
S26
CALCULATE CANDIDATE FOR NORMALIZED TORQUE PATTERN $y_{(n+1)}$ IN (n+1)TH ADJUSTMENT BASED ON CHANGE AMOUNT $\Delta y_{(n+1)}$
S27
CALCULATE EVALUATION VALUE $J\omega m_{(n+1)}$ USING CANDIDATE FOR NORMALIZED TORQUE PATTERN $y_{(n+1)}$ IN (n+1)TH ADJUSTMENT
S28
EVALUATION VALUE $J\omega m_{(n+1)}$ < EVALUATION VALUE $J\omega m_{(n)}$
S29
YES
NO
DISCARD CANDIDATE FOR NORMALIZED TORQUE PATTERN $y_{(n+1)}$ IN (n+1)TH ADJUSTMENT AND ADOPT NORMALIZED TORQUE PATTERN $y_{(n)}$ IN n-TH ADJUSTMENT AS NEXT REFERENCE
S30
ADOPT CANDIDATE FOR NORMALIZED TORQUE PATTERN $y_{(n+1)}$ IN (n+1)TH ADJUSTMENT AS NEXT REFERENCE
S31
RELEASE HOLD OF AVERAGE TORQUE COMMAND VALUE $^{pre}\tau_{cmd}$
S32
END

FIG. 11

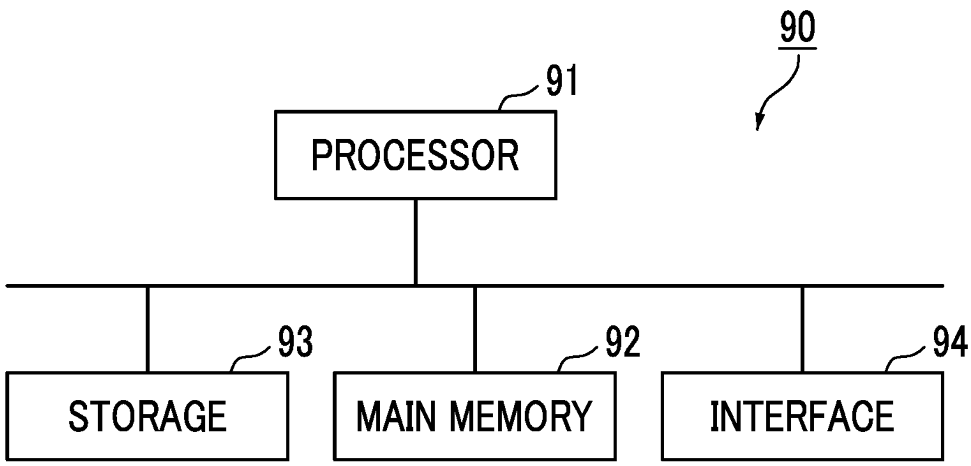

## INTERNATIONAL SEARCH REPORT

International application No.
**PCT/JP2023/015810**

### A. CLASSIFICATION OF SUBJECT MATTER

***H02P 27/06***(2006.01)i; ***F04B 49/06***(2006.01)i; ***F24F 11/86***(2018.01)i; ***F25B 1/00***(2006.01)i
FI: H02P27/06; F04B49/06 341G; F24F11/86; F25B1/00 361D; F25B1/00 371Z

According to International Patent Classification (IPC) or to both national classification and IPC

### B. FIELDS SEARCHED

Minimum documentation searched (classification system followed by classification symbols)

H02P27/06; F04B49/06; F24F11/86; F25B1/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 5291325 B2 (MITSUBISHI HEAVY IND LTD) 18 September 2013 (2013-09-18) entire text, all drawings | 1-10 |
| A | JP 2019-187087 A (MITSUBISHI HEAVY IND THERMAL SYSTEMS LTD) 24 October 2019 (2019-10-24) entire text, all drawings | 1-10 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 May 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/015810**

| Patent document cited in search report | Publication date (day/month/year) | Patent family member(s) | Publication date (day/month/year) |
| --- | --- | --- | --- |
| JP 5291325 B2 | 18 September 2013 | JP 2008-245506 A | |
| JP 2019-187087 A | 24 October 2019 | WO 2019/198507 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022169319 A
- JP 2008245506 A